Europäisches Patentamt

European Patent Office

Office européen des brevets

(19)

(11) Publication number: **0 322 167**
**A2**

## (12) EUROPEAN PATENT APPLICATION

(21) Application number: **88311996.8**

(22) Date of filing: **19.12.88**

(51) Int. Cl.⁴ **G06F 3/06**

(30) Priority: **22.12.87 CA 555139**

(43) Date of publication of application:
**28.06.89 Bulletin 89/26**

(84) Designated Contracting States:
**AT BE CH DE ES FR GB GR IT LI LU NL SE**

(71) Applicant: **ARCHIVAL JOINT VENTURE**
**5000 Dufferin Street Unit G**
**Downsview Ontario(CA)**

(72) Inventor: **Hutchinson, Gerry**
**31 Progress Court Unit 5**
**Scarborough Ontario(CA)**
Inventor: **Laton, Dan**
**168A Oakdale Road**
**Downsview Ontario(CA)**

(74) Representative: **Wombwell, Francis et al**
**Potts, Kerr & Co. 15, Hamilton Square**
**Birkenhead Merseyside L41 6BR(GB)**

(54) Dat storage systems for computers.

㊼ Apparatus for organizing data from a digital computer into a specific format and providing data conversion rate control and buffering of the data in order to allow the data to be transmitted to and stored on a digital audio tape machine in the required bi-phase space format.

FIG. 1

## DAT STORAGE SYSTEMS FOR COMPUTERS

This invention relates to computer facilities for data processing. In particular, it relates to means to enable the storage of data by organizing it into a specific format so that it can be stored onto a digital audio tape machine.

Digital computers are well known for their capacity to handle and store vast quantities of data. However the data stored in computers is vulnerable to theft, eraser, or other forms of destruction which causes users to be concerned about reliable retrieval of the stored data or programs. This has resulted in the development of archival procedures and devices in order to ensure that valuable data may be retrieved from a secondary external source should it be lost or damaged by failure of the primary storage system. Although many methods and devices exist to perform this function, they all tend to suffer from disadvantages such as expense which limits them to wealthy users, or they are exceptionally slow in operation or have a low data capacity which makes them unsuitable for efficient commercial use.

Recent technological developments in digital audio recording have provided means which provide a reasonable compromise with respect to the foregoing considerations, in the form of a digital audio tape recorder (or DAT). A digital tape recorder is a relatively inexpensive consumer product which combines high speed, low price, and substantial capacity.

The difficulty with DAT devices, which are designed for transmission of audio signals, is that they do not easily connect to a digital computer or handle data in the format and timing constraints of a computer and they therefore require sophisticated interface mechanisms in order to overcome this incompatibility.

It is the purpose of this invention to provide means whereby a digital computer may be rendered compatible with a DAT device to provide a fast, inexpensive, high capacity back-up means for storing computer data.

The interface between a digital computer and a DAT machine must be capable of providing data formatting, data rate control, data integrity verification, and machine control.

Data formatting is required because the DAT machine requires and provides a specifically formatted bi-phase mark data stream with invalid transitions which indicate frame synchronization points. This data stream is provided at a precise and specific data rate via external digital data connectors on the DAT device itself. This format is not recognized nor produced by normal digital computer interface devices and must therefore be interpreted by an extraneous device, and converted between its native format and a format more manageable by the host computer. This format will be used locally by the interface to manage the data while it is in transit between the DAT machine and the host computer.

Data rate control is required by the additional constraint that is placed on the system by the DAT machine which is the requirement of an exact data rate. This is due to the fact that the DAT machine is a precisely controlled mechanical system that takes a very long time to stabilize, relative to the data rate, and therefore once the mechanical subsystem stabilizes, it is not to be stopped without imposing an unwanted start up delay. This requires the use of a buffering system that will intermediately store the data while the buffer is being burst, or asynchronously, accessed by the computer system at one port and synchronously accessed by the DAT at the other port. The size of the buffer must be capable of containing enough data to prevent the DAT machine subsystem from having to stop or start in a manner that causes it to be the bottle neck of the data transfer process.

Data integrity verification is required because the interface must be capable of ensuring that all data supplied by the host or to the host is error free. In the event that the data is not error free, it will be the responsibility of the interface to provide a mechanism which will allow the system to retry the transmission with the host until the data is successfully transferred.

Machine control is required in the event of a data over-run during restoring operation from the DAT to the host, or a data under-run during the back-up process. It will be the responsibility of the interface to stop and start the DAT machine in order that it will effectively utilize the available buffer. This circumstance may occur when the sustained data transfer rate of the host is slower than that of the DAT and a data transfer occurs that cannot be wholly contained by the buffer.

The foregoing functions can be achieved by the present invention which comprises means to reformat asynchronous digital computer data to a synchronous bi-phase data stream, means to control the rate of data transmission to said DAT machine, means to verify that data transmitted by the interface is error free, and means to control the DAT machine to stop or start in the event of data over-run or under-run.

These functions are achieved by providing an interface which includes "TAXI" means for transmitting digital computer data from a remote interface board to a host data communications processor, which in turn communicates data to a direct memory access for transmission to an F.I.F.O. memory and thence through an error detection and correction means to a dual ported cache memory block for intermediate storage. The temporarily stored data in the memory block is transmitted through a second direct memory access to a second F.I.F.O. memory block to a data formatter adapted to convert asynchronous digital computer data to synchronous continuous bi-phase data stream at a defined rate. The data formatter is provided with a time base for determining the rate of data transmission and communicates its reformatted data to the DAT mechanism. A communications and machine control processor is provided to control the operations of the host data processor, the direct memory access, the F.I.F.O. memory, the error detection and correction block, and the operation of the DAT machine.

Thus, the asynchronous flow of digital data from the computer is buffered to allow it to be handled by the data formatter and transmitted at a fixed rate to the DAT machine for storage.

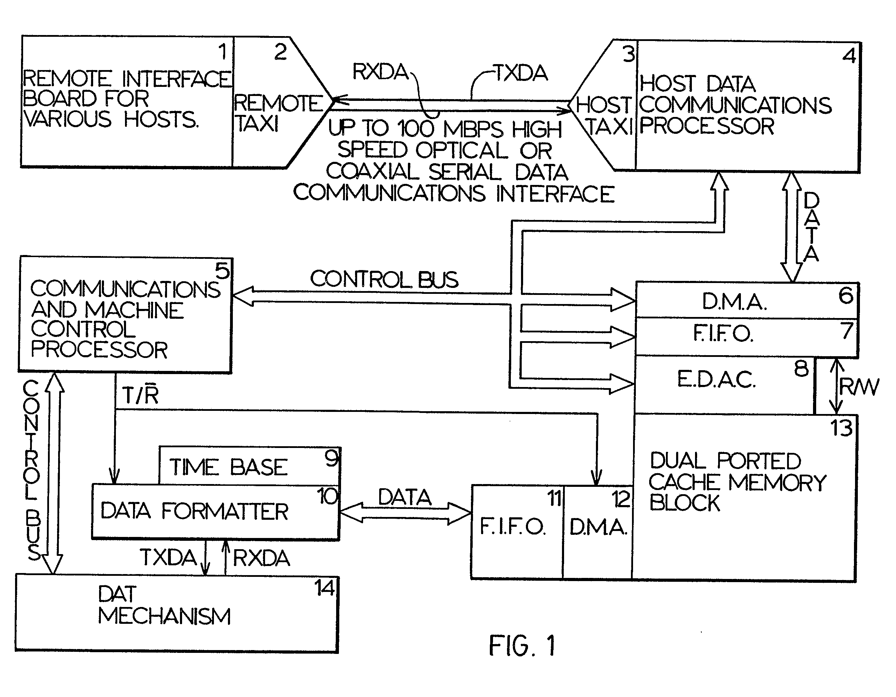

The nature of the present invention can be better understood by the following description of a particular archival data system, as illustrated in Figure 1, which is a block diagram of the transfer means which interface between a host computer and a DAT mechanism.

The interface system illustrated in Figure 1 is designed to provide an extremely efficient data archival system which may be readily adapted to a multitude of systems and tasks that require high capacity storage.

In the preferred embodiment illustrated in Figure 1, reference numeral 1 represents the circuitry that would be unique to each application of the system and is meant to provide an interface between the system to be supported and the "TAXI" section of the remote interface board whereby the compatibility with commercially available systems, such as "IBM Personal Computer, QIC, CDC Pertec, SCSI, ESDI" (all trade marks) and the like are implemented.

2 represents a "Transparent Asynchronous Transmitter/Receiver Interface" (commonly referred to as "TAXI"). This section establishes a high speed (up to 100 megabits per second full duplex) communications line between the local interface board and the host data communications processor. It is responsible for transmitting and receiving both data and control information, as well as ensuring absolute data integrity at the interface level. This is accomplished by returning the received data back to the transmitter where it is verified, and retransmitted if in error.

3 represents the other side of the "TAXI" communicating with the host data communications processor 4.

The host data communications processor 4 is responsible for separating and combining the command information and data from or for the raw data stream that is supplied by the "TAXI" or produced for the "TAXI". This processor is additionally responsible for throttling the transmission of valid data on the communications line.

Block 5 represents the communications and machine control microprocessor and is used to control and supervise the functioning of the archival system, as well as to generate extraneous information that is to be stored on the tape in order to separate recordings. In the absence of external commands to the contrary, the microprocessor will decide on the optimum duty cycle of the DAT system.

The communications and machine control processor 5 is connected by a control bus to the direct memory access 6 which is used to automatically transfer information to the F.I.F.O memory 7 as space becomes available.

The F.I.F.O. memory 7 is a bi-directional buffer used as an efficient method of transferring data in and out of the dual ported memory at an extremely high speed, without the need to be concerned with latency problems which could arise if the opposite port of the DMA memory was currently active when the access was attempted.

Block 8 represents the error, detection, and correction block which is responsible for appending redundant information to the archive bound data in order that any errors may be detected and corrected as the data is returned from the archive. In the event that the data cannot be corrected, the user would be notified and the system would await further instruction. Ideally, this block would reside between blocks 1 and 2 but this may not be feasible due to timing constraints.

Due to the fact that all data communications with the tape system must be absolutely synchronous at a predefined transmission rate, it is necessary to maintain a time base, block 9, for accurately determining the transmitting and receiving rate of the data formatter 10.

The data formatter 10 is responsible for providing a formatted continuous bi-phase mark data stream to the DAT mechanism in accordance with prescribed standards established by the document RECOMMENDED DESIGN STANDARD FOR DIGITAL AUDIO TAPE RECORDING SYSTEM, 2nd DRAFT, DAT CONFERENCE, April 16, 1986, PART V "A DIGITAL AUDIO INTERFACE FOR DOMESTIC USE". It is necessary to provide this data stream regardless of availability of valid data from the memory. Therefore, in the event the data has not been provided by the memory in time for the required transmission, the formatter will transmit a predetermined pattern and deassert the validity bits.

In turn, the formatter 10 will detect the invalid pattern mentioned above when it is returned and simply disregard the entire pattern. In the event that a valid pattern is returned to the formatter, it promptly transfers it to the F.I.F.O. for subsequent delivery to memory (and hence restoration).

Block 11 represents an F.I.F.O. memory similar to block 7 and block 12 represents a direct memory access similar to block 6. Block 13 represents a dual ported cache memory block which is required because the DAT system does not readily lend itself to random asynchronous access. Because of this it is really only usable as a high speed synchronous block transfer device, and it is necessary to combine it with a control system that can convert between its stringent requirements and those of less disciplined and/or predictable data systems. This can be accomplished by a control system employing a dual port memory cache of from 1 to 8 megabits of data. The data may then be read from or written to the memory at a high speed synchronous format by the DAT through one port, and in an asynchronous manner to the opposite port. The cycle frequency of the DAT being inversely proportional to the capacity of the memory. This approach would also allow extremely low speed data acquisition systems to compile blocks of data into the memory where the archive machine could automatically save it to tape when it became worthwhile to start the DAT subsystem.

Block 14 represents the Digital Audio Tape Mechanism controlled by the processor 5 through a control bus and in communication with the data formatter 10.

Thus, by means of the foregoing subsystems, an interface is provided which will handle the transmission of data between a digital computer and a DAT mechanism while providing the essential functions of data formatting, data rate control, data integrity verification, and machine control.

It will, of course, be realized that modifications and variations of the embodiment illustrated and described above may be employed without departing from the inventive concept herein.

## Claims

1. Apparatus adapted to provide an interface for the transmission of digital computer data to storage on a DAT machine, said interface apparatus comprising:
- means to reformat asynchronous digital computer data to a synchronous bi-phase data stream;
- means to control the rate of data transmission to said DAT machine;
- means to verify that data transmitted by said interface is error free;
- control means to stop or start the said DAT machine in the event of data over-run or under-run.

2. Apparatus as claimed in claim 1 in which said interface comprises:
- a transparent asynchronous transmitter receiver interface communicating with a remote interface board of a digital computer;
- a host data communications processor coupled to said transparent asynchronous transmitter receiver interface;
- direct memory access means adapted to transmit information from the aforesaid processor;
- F.I.F.O. memory means adapted to receive information from the aforesaid direct memory access means;
- error detection and correction means adapted to handle information from the aforesaid F.I.F.O. memory;
- dual ported cache memory block coupled to said error detection and correction block;
- a second direct memory access means coupled to said memory block;
- a second F.I.F.O. memory coupled to said second direct access memory means;
- means for transferring data from said second F.I.F.O memory;
- a data formatter adapted to receive data transmitted from said F.I.F.O. memory and adapted to format said data to provide a continuous bi-phase data stream at a predetermined rate to said DAT mechanism;
- a time base for accurately determining the transmittal and receiving rate of the aforesaid data formatter;
- communications and machine control processor means adapted to control said host data communications processor, said direct memory access, said F.I.F.O. memory means, said error detection and correction means, and said DAT machine.

FIG. 1